Europäisches Patentamt

European Patent Office

Office européen des brevets

(11) Publication number: **0 289 272 B1**

# EUROPEAN PATENT SPECIFICATION

(45) Date of publication of patent specification: **16.12.92**　(51) Int. Cl.⁵: **H04N 9/85**, H04N 9/83

(21) Application number: **88303771.5**

(22) Date of filing: **27.04.88**

(54) **Method and apparatus for demultiplexing a colour video signal.**

(30) Priority: **28.04.87 JP 105445/87**

(43) Date of publication of application:
**02.11.88 Bulletin　88/44**

(45) Publication of the grant of the patent:
**16.12.92 Bulletin　92/51**

(84) Designated Contracting States:
**DE FR GB**

(56) References cited:
**DE-A- 3 314 782**
**US-A- 3 872 498**
**US-A- 4 186 411**
**US-A- 4 612 585**

(73) Proprietor: **VICTOR COMPANY OF JAPAN,
LIMITED**
**3-12, Moriya-cho**
**Kanagawa-ku Yokohama(JP)**

(72) Inventor: **Tsuruta, Masahiko**
**81, Nakaodai**
**Naka-ku Yokohama(JP)**
Inventor: **Shibayama, Kenji**
**6-17-7-103, Ooi**
**Shinagawa-ku Tokyo(JP)**
Inventor: **Kido, Kouichi**
**Haitsu Susuki 101 2-7-5, Ikegami**
**Yokosuka-shi Kanagawa-ken(JP)**

(74) Representative: **Senior, Alan Murray**
**J.A. KEMP & CO 14 South Square Gray's Inn**
**London WC1R 5EU(GB)**

Rank Xerox (UK) Business Services

## Description

This invention relates to a recording and reproducing apparatus such as a video tape recorder (VTR).

In high picture quality VTRs, a luminance signal occupies a wide frequency band which includes a band containing a carrier chrominance signal. During a reproduction process, inadequate separation between the luminance signal and the carrier chrominance signal causes the carrier chrominance signal to contain components of the luminance signal. The luminance signal components in the carrier chrominance signal interfere with the reproduced luminance signal, causing noise known as "cross-colour" or other unwanted phenomena in reproduced pictures and images.

US-A-4,186,411 discloses a method and apparatus for decoding a frequency-division multiplexed encoded signal in accordance with the preambles of claims 1 and 5.

According to the present invention there is provided apparatus for decoding a frequency-division multiplexed encoded signal produced by encoding a colour video signal, the apparatus comprising

filter means for separating the encoded frequency-division multiplexed signal into a reproduced frequency-lowered carrier chrominance signal and a reproduced frequency-modulated luminance signal,

means for frequency-demodulating the reproduced frequency-modulated luminance signal into a reproduced luminance signal,

means for frequency-converting the reproduced frequency-lowered carrier chrominance signal back into a reproduced carrier chrominance signal,

a comb filter for deriving a second reproduced carrier chrominance signal from the reproduced carrier chrominance signal,

and means for combining the reproduced luminance signal and the second reproduced carrier chrominance signal into a reproduced composite colour video signal, the apparatus being characterised in that

said comb filter operates to remove unwanted luminance signal components from the reproduced carrier chrominance signal, and in that it further comprises

a second comb filter coupled to the frequency demodulating means for attenuating $(n + 1/2)fH$ frequency components in the reproduced luminance signal, where the letter "n" denotes a natural number and fH denotes the horizontal synchronizing frequency of the video signal.

The present invention also provides a method of decoding a frequency-division multiplex encoded signal produced by encoding a colour video signal, the method comprising the steps of:

separating the encoded frequency-division multiplexed signal into a reproduced frequency-lowered carrier chrominance signal and a reproduced frequency-modulated luminance signal,

frequency-demodulating the reproduced frequency-modulated luminance signal into a reproduced luminance signal,

frequency-converting the reproduced frequency-lowered carrier chrominance signal back into a reproduced carrier chrominance signal,

filtering the reproduced carrier chrominance signal using a comb filter to produce a second reproduced carrier chrominance signal, and

combining the reproduced luminance signal and the second reproduced carrier chrominance signal into a reproduced composite colour video signal, the method being characterised in that the said step of comb filtering removes unwanted luminance signal components from the reproduced carrier chrominance signal and by the further step of

attenuating $(n + 1/2)fH$ frequency components in the reproduced luminance signal using a second comb filter, where the letter "n" denotes a natural number and fH denotes a horizontal synchronizing frequency of the video signal.

Conventionally, the apparatus and method are adapted to reproduce from a magnetic recording medium e.g. that used conventionally in video tape recorders and the output is in a form suitable to drive a conventional T.V. receiver.

The invention will be further described by way of non-limitative example with reference to the accompanying drawings, in which:-

Fig. 1 is a block diagram of a magnetic recording and reproducing apparatus to which the present invention may be applied.

Fig. 2 is a block diagram of a magnetic recording and reproducing apparatus according to the present invention.

Fig. 3 is a diagram of spectra of various signals in the magnetic recording and reproducing apparatus of Fig. 1.

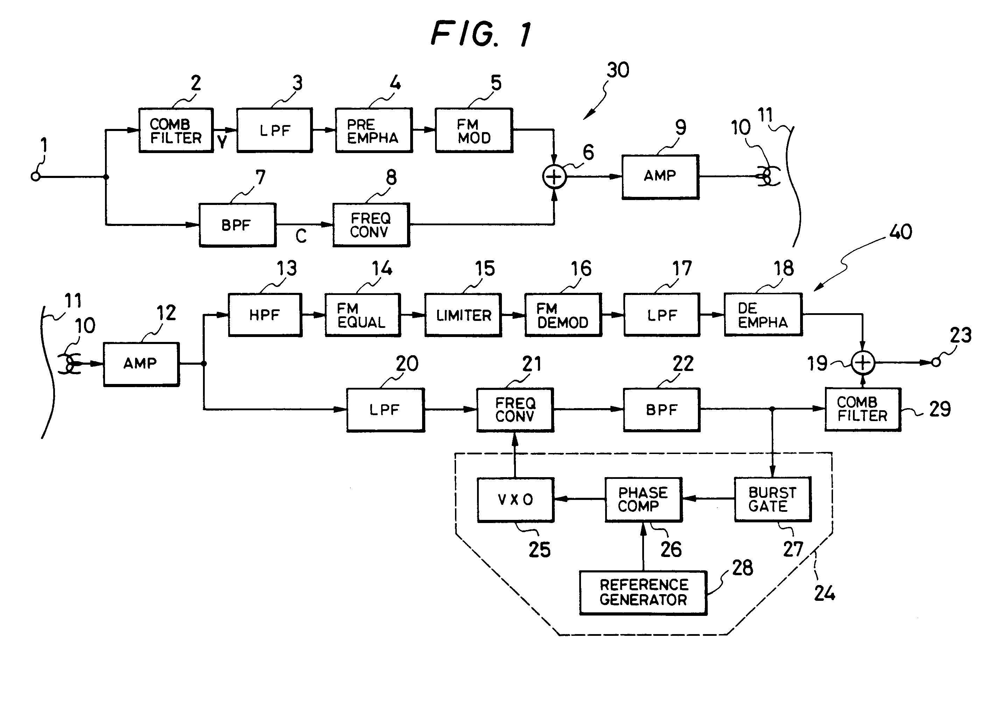

As shown in Fig. 1, an apparatus to which the present invention may be applied includes a recording section 30 and a reproducing section 40.

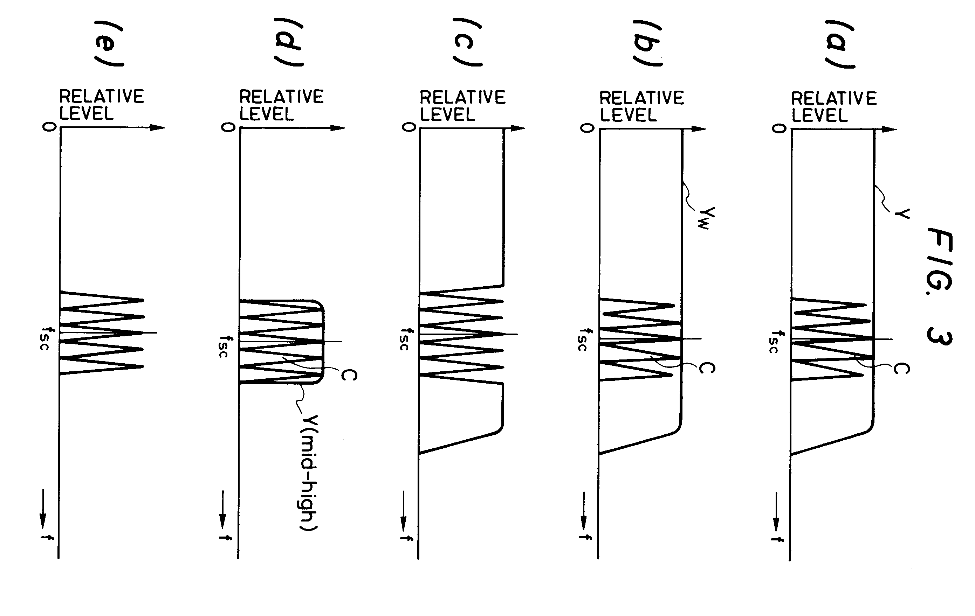

The recording section 30 receives and processes a composite color video signal which has a wide-band luminance signal Y and a carrier chrominance signal C as shown in Fig. 3(a). Specifically, the luminance signal Y lies in a wide band containing a band of the carrier chrominance signal C. For example, the band of the luminance signal Y extends up to a frequency slightly higher than 5 MHz. The band of the carrier chrominance signal C ranges around a color subcarrier frequency fsc, for example, 4.43 MHz.

An input terminal 1 of the recording section 30 receives a composite color video signal, which is transmitted to a comb filter 2. The comb filter 2 removes the carrier chrominance signal C from the composite video signal. A low pass filter 3 removes unnecessary high-frequency components from the luminance signal Y. A luminance signal outputted from the low pass filter 3 is fed to an FM modulator 5 via a preemphasis circuit 4. The FM modulator 5 modulates the luminance signal into a corresponding FM luminance signal in a form of frequency-modulated carrier, which is applied to an adder 6.

The composite color video signal received by the input terminal 1 is also transimitted to a band pass filter 7. The band pass filter 7 has a pass band center frequency equal to a color subcarrier frequency fsc, separating a carrier chrominance signal C from the composite video signal. As shown in Fig. 3(d), an output signal from the band pass filter 7 contains a carrier chrominance signal C and middle to high frequency luminance signal components Y (mid-high). A frequency down converter 8 derives a frequency-lowered (down-converted) carrier chrominance signal from the carrier chrominance signal C. The frequency-lowered carrier chrominance signal signal is applied to the adder 6.

The FM luminance signal and the frequency-lowered carrier chrominance signal are combined by the adder 6 into a frequency-division multiplexed signal. The frequency-division multiplexed signal is fed to a magnetic head 10 via a recording amplifier 9. The magnetic head 10 records the frequency-division multiplexed signal into a magnetic tape 11.

Before the FM luminance signal and the frequency-lowered carrier chrominance signal are combined, a high pass filter (not shown) removes low frequency components from the FM luminance signal so that the band of the FM luminance signal extends above the band of the frequency-lowered carrier chrominance signal in a frequency scale.

The reproducing section 40 includes a preamplifier 12 receiving a frequency-division multiplexed signal reproduced from the magnetic tape 11 via the magnetic head 10. The reproduced frequency-division multiplexed signal is transmitted via the preamplifier 12 to a high pass filter 13 and a low pass filter 20.

The high pass filter 13 separates an FM luminance signal from the reproduced frequency-division multiplexed signal. As shown in Fig. 3(c), the reproduced FM luminance signal outputted from the high pass filter 13 has a signal band extending toward a high frequency side beyond the color subcarrier frequency range centered at fsc. An FM equalizer 14 corrects phase and amplitude characteristics of the reproduced FM luminance signal. A limiter 15 removes AM components from an output signal of the FM equalizer 14. An output signal from the limiter 15, that is, an FM luminance signal, is demodulated back into a luminance signal by an FM demodulator 16. The luminance signal is fed to an adder 19 via a low pass filter 17 and a deemphasis circuit 18.

The low pass filter 20 separates a frequency-lowered carrier chrominance signal from the reproduced frequency-division multiplexed signal. The frequency-lowered carrier chrominance signal is converted back into a carrier chrominance signal by a frequency up converter 21. An automatic phase control (APC) circuit 24 connected to the frequency converter 21 includes a combination of a burst gate 27, a phase comparator 26, a reference signal generator 28, and a variable crystal oscillator 25. The reference signal generator 28 feeds a reference signal to the phase comparator 26. The frequency converter 21, a band pass filter 22, the burst gate 27, the phase comparator 26, the variable crystal oscillator 25 form an APC loop which performs time base corrections on the carrier chrominance signal. The band pass filter 22 removes unnecessary frequency components from the carrier chrominance signal.

A comb filter 29 receives an output signal from the band pass filter 22, that is, a carrier chrominance signal. The comb filter 29 removes middle to high frequency luminance signal components from the carrier chrominance signal. It should be noted that the middle to high frequency luminance signal components are undesirably contained in the carrier chrominance signal by the separation process of the band pass filter 7 during recording. The carrier chrominance signal, which is substantially free from the undesirable luminance signal components, is outputted from the comb filter 29 to the adder 19 as a signal having a spectrum of Fig. 3-(e).

The adder 19 combines the reproduced wideband luminance signal Yw and the carrier chrominance signal into a composite color video signal, as shown in Fig. 3(b), which is quite close to an original input color video signal before recording as shown in Fig. 3(a). The color video signal outputted from the adder 19 is transmitted via an output terminal 23 of the reproducing section 40.

As described previously, the comb filter 29 removes undesirable luminance signal components from the reproduced carrier chrominance signal. Accordingly, although only the reproduced carrier chrominance signal undergoes the time base corrections in the APC process circuit 24 and the luminance signal band extends beyond the color subcarrier frequency range, the comb filter 29 prevents such undesirable luminance signal components otherwise mixed into the reproduced carrier chrominance signal from interfering with the reproduced luminance signal as the "cross-color" so that a high quality of reproduced images or pictures is ensured.

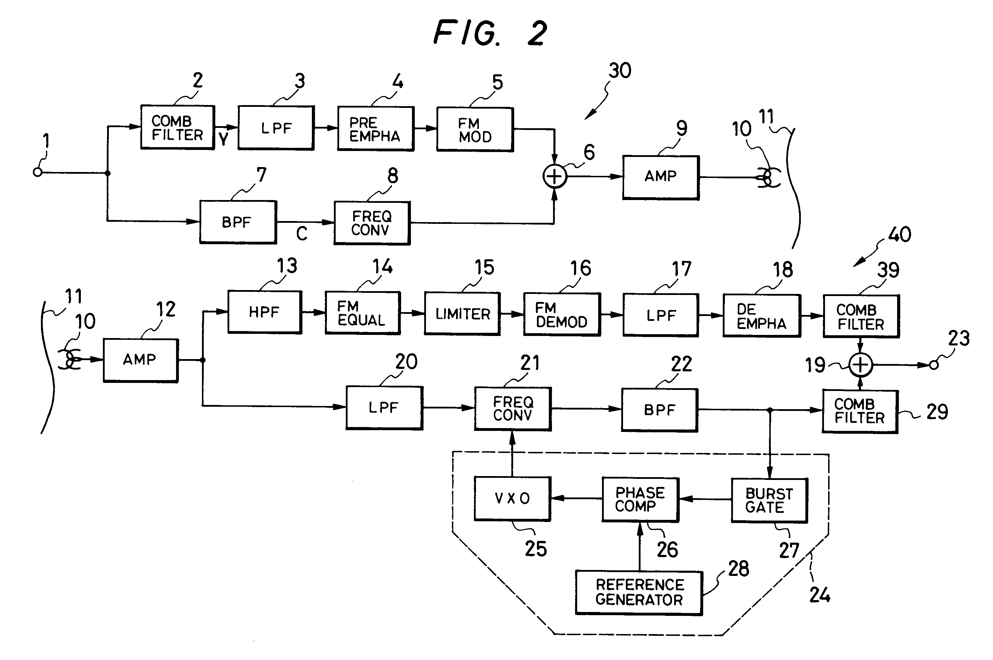

Fig. 2 shows an embodiment of this invention which is similar to the apparatus of Fig. 1 except that a further comb filter 39 is added.

As shown in Fig. 2, a reproducing section 40 of the embodiment includes the comb filter 39 which is interposed between a deemphasis circuit 18 and an adder 19. The comb filter 39 has frequency characteristics corresponding to frequency spectrum of the reproduced carrier chrominance signal fed to the adder 19. The comb filter 39 attenuates $(n + 1/2)fH$ components in a reproduced luminance signal, where the letter "n" denotes a natural number and the character fH denotes a horizontal sync frequency.

After the recording comb filter 2 removes carrier chrominance signal components from the luminance signal, the luminance signal is contaminated by spurious signals developing during the subsequent processes. The spurious signals have components falling into the frequency spectrum of the reproduced carrier chrominance signal and cause an interference with the reproduced carrier chrominance signal. Such spurious signal components are removed by the reproducing comb filter 39. Accordingly, the carrier chrominance signal substantially free from middle to high frequency luminance signal components and the luminance signal substantially free from carrier chrominance signal components have an ideal interleaving relation and are combined into a composite color video signal at the adder 19. For the same reason, the comb filter 39 also prevents a possible interference between the reproduced luminance signal and the reproduced carrier chrominance signal during a process of combining these signals into a composite color video signal so that a higher quality of reproduced images and pictures is ensured.

**Claims**

1. Apparatus for decoding a frequency-division multiplexed encoded signal produced by encoding a colour video signal, the apparatus comprising

   filter means (13,20) for separating the encoded frequency-division multiplexed signal into a reproduced frequency-lowered carrier chrominance signal and a reproduced frequency-modulated luminance signal,

   means (16) for frequency-demodulating the reproduced frequency-modulated luminance signal into a reproduced luminance signal,

   means (21) for frequency-converting the reproduced frequency-lowered carrier chrominance signal back into a reproduced carrier chrominance signal,

   a comb filter (29) for deriving a second reproduced carrier chrominance signal from the reproduced carrier chrominance signal,

   and means (19) for combining the reproduced luminance signal and the second reproduced carrier chrominance signal into a reproduced composite colour video signal, the apparatus being characterised in that

   said comb filter (29) operates to remove unwanted luminance signal components from the reproduced carrier chrominance signal, and in that it further comprises

   a second comb filter (39) coupled to the frequency demodulating means (16) for attenuating $(n + 1/2)fH$ frequency components in the reproduced luminance signal, where the letter "n" denotes a natural number and fH denotes the horizontal synchronizing frequency of the video signal.

2. Apparatus according to claim 1 wherein said decoding is for reproducing a recorded signal from a recording medium.

3. Apparatus according to claim 1 or 2 including transducer means for reproducing the encoded signal from a recording medium.

4. Apparatus for recording and reproducing a colour video signal including decoding apparatus according to claim 1, 2 or 3.

5. A method of decoding a frequency-division multiplex encoded signal produced by encoding a colour video signal, the method comprising the steps of:

   separating the encoded frequency-division multiplexed signal into a reproduced frequency-lowered carrier chrominance signal and a reproduced frequency-modulated luminance signal,

   frequency-demodulating the reproduced frequency-modulated luminance signal into a reproduced luminance signal,

   frequency-converting the reproduced frequency-lowered carrier chrominance signal back into a reproduced carrier chrominance signal,

   filtering the reproduced carrier chrominance signal using a comb filter (29) to produce a second reproduced carrier chrominance signal, and

   combining the reproduced luminance signal and the second reproduced carrier chrominance signal into a reproduced composite colour video signal, the method being characterised in that the said step of comb filtering removes unwanted luminance signal components from the reproduced carrier chrominance signal and by the further step of attenuating $(n+1/2)fH$ frequency components in the reproduced luminance signal using a second comb filter, where the letter "n" denotes a natural number and fH denotes a horizontal synchronizing frequency of the video signal.

6. A method according to claim 5 wherein said decoding is carried out for the purpose of reproducing a recorded signal from a recording medium.

**Patentansprüche**

1. Vorrichtung zum Dekodieren eines frequenzteilungs-multiplexierten kodierten Signals, das durch Kodieren eines Farbvideosignals erzeugt ist, wobei die Vorrichtung umfaßt Filtermittel (13, 20) zum Auftrennen des kodierten frequenzteilungs-multiplexiertenSignals in ein wiedergegebenes frequenzabgesenktes Trägerchrominanzsignal und ein wiedergegebenes frequenzmoduliertes Luminanzsignal,
Mittel (16) zum Frequenz-Demodulieren des wiedergegebenen frequenzmodulierten Luminanzsignals zu einem wiedergegebenen Luminanzsignal,
Mittel (21) zum Frequenzwandeln des wiedergegebenen frequenzabgesenkten Trägerchrominanzsignals zurück in ein wiedergegebenes Trägerchrominanzsignal,
ein Kammfilter (29) zum Ableiten eines zweiten wiedergegebenen Trägerchrominanzsignals von dem wiedergegebenen Trägerchrominanzsignal,
und Mittel (19) zum Kombinieren des wiedergegebenen Luminanzsignals und des zweiten wiedergegebenen Trägerchrominanzsignals zu einem wiedergegebenen zusammengesetzten Farbvideosignal, wobei die Vorrichtung dadurch gekennzeichnet ist, daß
das Kammfilter (29) zum Entfernen unerwünschter Luminanzsignal-Komponenten von dem wiedergegebenen Trägerchrominanzsignal wirkt und daß es weiter umfaßt
ein zweites, mit dem Frequenz-Demodulationsmittel (16) gekoppeltes Kammfilter (39) zum Dämpfen von $(n+1/2)fH$-Frequenzkomponenten in dem wiedergegebenen Luminanzsignal, wobei der Buchstabe "n" eine natürliche Zahl und fH die Horizontal-Synchronisierfrequenz des Videosignals bezeichnen.

2. Vorrichtung nach Anspruch 1, bei der die Dekodierung zur Wiedergabe eines aufgezeichneten Signals von einem Aufzeichnungsmedium geschieht.

3. Vorrichtung nach Anspruch 1 oder 2, mit Wandlermittel zum wiedergeben des kodierten Signals von einem Aufzeichnungsmedium.

4. Vorrichtung zum Aufzeichnen und Wiedergeben eines Farbvideosignals, die Dekodiervorrichtung nach Anspruch 1, 2 oder 3 enthält.

5. Verfahren zum Dekodieren eines frequenzteilungs-multiplexierten kodierten Signals, das durch Kodieren eines Farbvideosignals erzeugt ist, wobei das Verfahren die Schritte umfaßt:
daß das kodierte frequenzteilungs-multiplexierte Signal in ein wiedergegebenes frequenzabgesenktes Trägerchrominanzsignal und ein wiedergegebenes frequenzmoduliertes Luminanzsignal aufgetrennt wird,
daß das wiedergegebene frequenzmodulierte Luminanzsignal in ein wiedergegebenes Luminanzsignal frequenz-demoduliert wird,
daß das wiedergegebene frequenzabgesenkte Trägerchrominanzsignal in ein wiedergegebenes Trägerchrominanzsignal zurück frequenzgewandelt wird,
daß das wiedergegebene Trägerchrominanzsignal unter Benutzung eines Kammfilters (29) gefiltert wird zum Erzeugen eines zweiten wiedergegebenen Trägerchrominanzsignals, und
daß das wiedergegebene Luminanzsignal und das zweite wiedergegebene Trägerchrominanzsignal in ein wiedergegebenes zusammengesetztes Farbvideosignal kombiniert werden, wobei das Verfahren dadurch gekennzeichnet ist, daß der Schritt des Kammfilterns unerwünschte Luminanzsignal-Komponenten von dem wiedergegebenen Trägerchrominanzsignal entfernt und daß der weitere Schritt enthalten ist, daß $(n+1/2)fH$-Frequenzkomponenten in dem wiedergegebenen Luminanzsignal unter Benutzung eines zweiten Kammfilters gedämpft werden, wobei der Buchstabe "n" eine natürliche Zahl und fH eine Horizontal-Synchronisier-Frequenz des Videosignals bezeichnen.

6. Verfahren nach Anspruch 5, bei dem die Dekodierung zu dem Zweck des Wiedergebens eines aufgezeichneten Signals von einem Aufzeichnungsmedium ausgeführt wird.

**Revendications**

**1.** Dispositif pour décoder un signal codé à multiplexage par répartition en fréquence produit par codage d'un signal vidéo couleur, le dispositif comprenant

un moyen formant filtre (13, 20) pour la séparation du signal codé à multiplexage par répartition en fréquence en un signal de chrominance reproduit dont la porteuse a été abaissée en fréquence et un signal de luminance reproduit à modulation de fréquence,

un moyen (16) pour la démodulation de fréquence du signal de luminance reproduit à modulation de fréquence en un signal de luminance reproduit,

un moyen (21) pour la reconversion de fréquence du signal de chrominance reproduit dont la porteuse a été abaissée en fréquence en un signal de porteuse de chrominance reproduit,

un filtre-peigne (29) pour extraire du signal de porteuse de chrominance reproduit un second signal de porteuse de chrominance reproduit,

et un moyen (19) pour combiner le signal de luminance reproduit et le second signal de porteuse de chrominance reproduit en un signal vidéo couleur composite reproduit, le dispositif étant caractérisé en ce que

ledit filtre-peigne (29) sert à éliminer du signal de porteuse de chrominance reproduit les composantes indésirables du signal de luminance, et en ce qu'il comporte en outre

un second filtre-peigne (39) couplé au moyen (16) de démodulation de fréquence pour atténuer $(n+1/2)fH$ composantes de fréquence dans le signal de luminance reproduit, où la lettre "n" désigne un nombre naturel et fH désigne la fréquence de synchronisation de lignes du signal vidéo.

**2.** Dispositif selon la revendication 1, dans lequel ledit décodage sert à reproduire un signal enregistré à partir d'un support d'enregistrement.

**3.** Dispositif selon la revendication 1 ou 2, comportant un moyen formant transducteur pour reproduire le signal codé à partir d'un agent d'enregistrement.

**4.** Dispositif pour enregistrer et reproduire un signal vidéo couleur comportant un dispositif de décodage selon la revendication 1, 2 ou 3.

**5.** Procédé de décodage d'un signal codé à multiplexage par répartition en fréquence produit par codage d'un signal vidéo couleur, le procédé comportant les étapes de;

séparation du signal codé à multiplexage par répartition en fréquence en un signal de chrominance reproduit dont la porteuse a été abaissée en fréquence et un signal de luminance reproduit à modulation de fréquence,

démodulation de fréquence du signal de luminance reproduit à modulation de fréquence en un signal de luminance reproduit,

reconversion de fréquence du signal de chrominance reproduit dont la porteuse a été abaissée en fréquence en un signal de porteuse de chrominance reproduit,

filtrage du signal de porteuse de chrominance reproduit à l'aide d'un filtre-peigne (29) pour produire un second signal de porteuse de chrominance reproduit, et

combinaison du signal de luminance reproduit et du second signal de porteuse de chrominance reproduit en un signal vidéo couleur composite reproduit, le procédé étant caractérisé en ce que ladite étape de filtrage par peigne élimine du signal de porteuse de chrominance reproduit les composantes indésirables du signal de luminance, et en outre par l'étape

d'atténuation, à l'aide d'un second filtre-peigne, de $(n+/2)fH$ composantes de fréquence dans le signal de luminance reproduit, où la lettre "n" désigne un nombre naturel et fH désigne une fréquence de synchronisation de lignes du signal vidéo.

**6.** Procédé selon la revendication 5, dans lequel ledit décodage est effectué dans le but de reproduire un signal enregistré à partir d'un support d'enregistrement.

## FIG. 1

EP 0 289 272 B1

# FIG. 2

EP 0 289 272 B1

# FIG. 3

(a)

(b)

(c)

(d)

(e)